# EUROPÄISCHE PATENTSCHRIFT

(11) **EP 0 832 015 B1**
(45) Veröffentlichungstag und Bekanntmachung des Hinweises auf die Patenterteilung: **10.04.2002**
(21) Anmeldenummer: 97907020.8
(22) Anmeldetag: 28.01.1997
(51) Int. Cl.: B60S 1/38

(54) **WISCHERBLATT**
WIPER BLADE
BALAI D'ESSUIE-GLACE

(30) Priorität: 27.03.1996 DE 19612081
(43) Veröffentlichungstag der Anmeldung: 01.04.1998
(73) Patentinhaber: ROBERT BOSCH GMBH, 70442 Stuttgart (DE)
(72) Erfinder: LEUTSCH, Wolfgang, D-77830 Bühlertal (DE); DESMET, Steven, B-1850 Grimberger (BE); VERELST, Hubert, B-3300 Tienen (BE); DE CONINCK, Dirk, B-1840 Londerzeel (BE); WYNEN, Paul, B-3530 Lamont (BE)
(86) Internationale Anmeldenummer: DE9700141
(87) Internationale Veröffentlichungsnummer: WO9735749

(56) Entgegenhaltungen:
- EP-A- 0 625 452
- EP-A- 0 727 337
- DE-A- 3 904 152
- GB-A- 920 323
- US-A- 4 669 144

## Beschreibung

### Stand der Technik

wischerblätter für Kraft- oder Luftfahrzeuge sind hohen mechanischen Beanspruchungen ausgesetzt, einerseits durch Staub, Insektenreste oder andere harte Schmutzbestandteile, die die zu reinigende Glasoberfläche rauh machen, andererseits durch die Kippbeanspruchung, die während des Wischvorgangs ständig wechselt und in Ruhestellung infolge des fortbestehenden Andrucks auf die Glasscheibe permanent ist. Zu den mechanischen Beanspruchungen kommen chemische oder Umwelteinwirkungen, z.B. durch Ozon, Öl sowie Alkohol und/oder Detergentien in der Scheibenwaschflüssigkeit.

Wischerblätter mit zweckentsprechenden Profilen (oder Querschnitten) werden, in der Regel kontinuierlich, aus vernetzbaren (oder vulkanisierbaren) Polymerenmischungen extrudiert, die nach der Extrusion vernetzt und auf die erforderliche Länge geschnitten werden. Die Profile weisen einen Kopf auf (auch Basisteil oder Rücken genannt), mit dem das Wischerblatt durch die Krallen im Bügelsystem des Scheibenwischers befestigt wird. Im Kopf befinden sich Ausnehmungen für eine oder zwei Federschienen aus elastischem Metall oder Kunststoff, die das Wischerblatt stabilisieren und einen möglichst gleichmäßigen Andruck über die gesamte Länge des Wischerblatts bewirken sollen.

Der Kopf geht an seiner der Glasscheibe zugewandten Seite in einen Kippsteg über, der auch kurz Steg, Hals, Scharnier oder Umlegesteg genannt wird und den Kopf mit der Lippe verbindet, die beim Betrieb des Scheibenwischers als der eigentliche funktionale Teil des Wischerblatts die Glasscheibe frei von Wasser hält. Der Kippsteg ist der mechanisch am stärksten geforderte Teil des Wischerblatts. Je nach seiner Höhe und der Ausgestaltung der einander gegenüberliegenden Flächen von Kopf und Lippe kann die Lippe im Ruhezustand mit ihrer Hauptquerschnittsachse um bis zu etwa 45° von der Senkrechten auf der Glasscheibe abweichen. Im Betriebszustand läuft die Lippe hinter dem Kopf her, wozu bei jedem Richtungswechsel eine Kippbewegung erforderlich ist. Die Hauptquerschnittsachse verändert dementsprechend ihre Lage im Betrieb ständig um bis zu etwa ±45°.

Die Materialien, aus denen Wischergummi bestehen, sind natürliche oder synthetische Polymere oder Copolymere mit Doppelbindungen, die z.B. mit organischen Peroxiden und bzw. oder Schwefel und/oder bestimmten Metalloxiden vernetzt werden. Wischerblätter nach dem Stand der Technik können mit allen genannten Teilen aus einem einzigen Material bestehen. Das ist zwar für die Herstellung günstig, trägt aber den unterschiedlichen Anforderungen an die verschiedenen Teile des Wischerblatts nicht Rechnung. Wenn z.B. das Material verhältnismäßig weich und elastisch ist, erfüllt es zwar wichtige Forderungen an den Kippsteg, eignet sich aber weniger für den Kopf, weil dieser dann im Betrieb nicht selten aus den Krallen, die das Wischerblatt im Metallbügel halten, herausgedreht wird. Ist das Material dagegen steifer und weniger elastisch, dann ist es zwar insoweit für den Kopf gut geeignet, jedoch der Kippbeanspruchung weniger gewachsen, der der Kippsteg ständig ausgesetzt ist.

Wischerblätter aus nur einem Material, nämlich Naturgummi oder einer Mischung aus Naturgummi und Chloroprengummi oder einem Gummi vom Dien-Typ, Butadien-Gummi und Styrol-Butadien-Gummi, werden in DE-C2 35 27 093 als zum Stand der Technik gehörig erwähnt. Naturgummi und andere Gummiarten vom Dien-Typ enthalten noch olefinische Doppelbindungen und sind daher gegen Ozon empfindlich. Die Neigung zur Ozonolyse läßt sich durch bestimmte Zusatzstoffe zurückdrängen. Durch "Halogenierung", z.B. Behandlung mit einer Hypochlorit-Lösung kann die Oberfläche des Wischerblatts oberflächlich gehärtet werden. Dies ist vorteilhaft für die Lippe, weil deren Abriebbeständigkeit erhöht wird. Allerdings muß man Kompromisse schließen, denn eine zu weitgehende Halogenierung der Oberfläche, die im Interesse der Abriebbeständigkeit erwünscht ist, kann die Lippe zu wenig schmiegsam machen, so daß sie sich der meist gewölbten Glasscheibe nicht mehr genügend anpaßt. Für einen Kippsteg aus Naturgummi oder Naturgummi und anderen Gummiarten vom Dien-Typ ist die Halogenierung jedoch schädlich, weil sie eine dauernde Verformung unter Druckbeanspruchung fördert. Einer solchen Beanspruchung ist das Wischerblatt sowohl im Ruhezustand, als auch im Betrieb ausgesetzt, weil es ständig gegen die Glasscheibe gedrückt wird. Zudem begünstigt die Halogenierung die Bildung von Rissen unter Sonneneinstrahlung, was bei dem durch die ständigen Kippbewegungen während des Wischens mechanisch hoch beanspruchten Kippsteg besonders unerwünscht ist.

Ein gattungsgemäßes Wischerblatt gemäß der DE-C2 35 27 093, mit den Merkmalen des Oberbegriffs besteht im wesentlichen aus nur einem Material, nämlich EPDM-Gummi, einem Copolymeren aus Ethylen, Propylen und einem Dien, das mit Peroxiden vernetzt wird und gegen Ozon weitgehend beständig ist. Das Wischerblatt hat lediglich am unteren, der Glasscheibe zugewandten Ende der Lippe sowie in den oberen peripheren Zonen des Kopfes kleine Segmente aus untergeordneten Mengen Dien-Gummi. Weiterhin enthält EPDM-Kautschuk häufig ein Öl, das die Flexibilität bei tiefen Temperaturen verbessert. Dieses Öl neigt dazu, an die Peripherie zu wandern (oder auszuschwitzen) und, insbesondere bei längeren Ruhephasen, Kopf und Lippe zu verkleben, die sich im Ruhezustand berühren. Weiterhin wandert das Öl über kurz oder lang auch in den Dien-Kautschuk und an dessen Oberfläche, die die Glasscheibe berührt. Staub und Schmutz, die an dem Öl kleben, ziehen dann beim Wischen Schleier und Streifen. Zudem ist EPDM-Kautschuk nicht beständig gegen Chemikalien. So verschlechtern alkoholhaltige Scheibenreinigungsmittel nach und nach die Physikalischen Eigenschaften des Gummis. Schließlich hat EPDM einen hohen Reibungskoeffizienten, der das Einziehen insbesondere innenliegender Federleisten erschwert und eine Oberflächenbeschichtung der Federleisten oder die Verwendung von Gleithilfsmitteln, wie Molybdänsulfid, erforderlich macht.

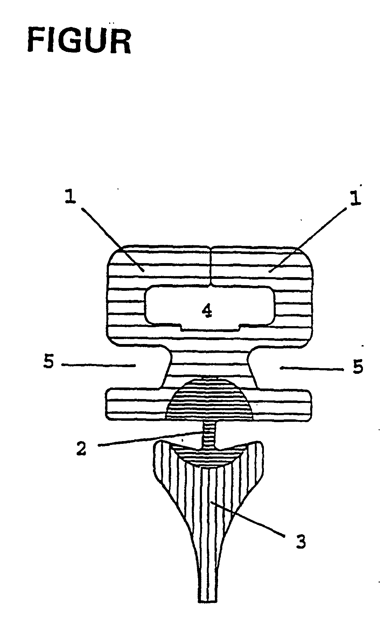

Es sind auch Wischerblätter aus unterschiedlichen, koextrudierten Materialien bekannt geworden, bei denen, anders als nach DE-C2 35 27 093, die verschiedenen Materialien in vergleichbaren Mengen eingesetzt wurden. In der EP-A1 0 625 452 wird ein Wischerblatt offenbart, das aus mindestens zwei verschiedenen Materialien besteht. Bei einer der beschriebenen Ausführungsformen (Figur 1) bestehen Kopf und Kippsteg aus demselben Material, und die aus einem anderen Material bestehende Lippe umschließt eine Verstärkung, in die der schmale Kippsteg ausläuft. Diese Ausführungsform hat den oben beschriebenen Nächteil, daß das Material den unterschiedlichen Anforderungen, die Kopf und Steg stellen, nicht voll gerecht wird.

### Vorteile der Erfindung

Die Wischerblätter nach der Erfindung haben einen Kopf aus einem steifen, glatten Material, das ihn fest in den Krallen des Metallbügels sitzen läßt, so daß die Wischerblätter beim Betrieb des Wischers nicht zum Ausdrehen aus der Halterung neigen. Das Material des Kippstegs verändert sich nicht oder kaum bei der Härtung durch Halogenieren und neigt daher nicht zu bleibender Verformung unter Druckbeanspruchung und zur Rißbildung durch Sonneneinstrahlung. Kopf und Lippe kleben auch während langer Ruhephasen nicht zusammen, weil sie nicht aus Öl enthaltendem EPDM-Gummi bestehen. Da der Kippsteg eine vergleichsweise kleine Masse besitzt, migriert selbst dann kein Öl in nennenswertem Umfang in die Lippe und zieht die Lippe selbst dann nicht in nennenswertem Maße Schleier und Streifen, wenn der Kippsteg aus EPDM-Gummi besteht. In den Kopf aus steifem, glatten Material können Federleisten ohne Gleithilfsmittel eingezogen werden, sowohl bei der Fertigung, als auch vom Endverbraucher, der ein neues Wischerblatt kauft. Die Wischerblätter sind zäh und abriebbeständig auch über lange Zeiträume, sind widerstandsfähig gegen Wasser, Öl, Detergentien und viele andere Chemikalien und widerstehen dem Abbau unter dem Einfluß von Ozon, sichtbarem und ultraviolettem Licht. Sie zeigen diesen Eigenschaften über einen weiten Temperaturbereich, einschließlich der Temperaturen, wie sie bei bestimmungsgemäßem Gebrauch herrschen können.

### Zeichnung

In der Figur ist ein Wischerblatt nach der Erfindung mit Kopf 1, Kippsteg **2** und Lippe **3** im Querschnitt dargestellt. Im Kopf **1** befindet sich eine Ausnehmung **4,** in die eine innenliegende Federleiste (nicht dargestellt) eingezogen ist. In die Ausnehmungen **5** greifen die Metallkrallen (ebenfalls nicht dargestellt) ein, die das Wischerblatt im Wischerbügel festhalten.

### Beschreibung der Erfindung

Wischerblätter nach den Patentansprüchen 1 bis 10 sind dem Wischerblatt nach der DE-C2 35 27 093 gattungsgemäß ausgebildet, vermeiden die Nachteile der Wischerblätter nach dem Stand der Technik und weisen die beschriebenen Vorteile auf.

Der Kopf **1** des Wischerblatts besteht aus einem steifen, durch Halogenierung gehärteten Polymeren mit einer Shore A-Härte von 60 bis 85. Steif soll der Wischerkopf sein, damit er hinreichend fest in den Krallen des Bügels sitzt, so daß er sich beim Betrieb des Wischers nicht aus den Krallen herausdreht. Andererseits soll er nicht starr, sondern in gewissem Ausmaß elastisch sein. Anderenfalls würde sich das Wischerblatt, dessen Eigenschaften insoweit maßgeblich durch die Eigenschaften des Kopfes bestimmt werden, nicht mehr hinreichend gut an die Krümmung der zumeist gewölbten Scheibe anpassen. Ein geeigneter Parameter zur Charakterisierung von Polymeren mit den gewünschten Eigenschaften ist die Shore A-Härte, die nach der Prüfvorschrift DIN 2240 bzw. DIN 53505 bestimmt wird. Die Shore A-Härte des Kopfmaterials beträgt zweckmäßig 60 bis 70. Polymere mit diesen Shore A-Werten weisen die gewünschte Steifigkeit auf und sind in dem gewünschten Ausmaß elastisch.

Weiterhin sind die Polymeren des Kopfes **1** durch Halogenierung gehärtet. Dadurch werden der Reibungswiderstand und der Abrieb vermindert. Der verminderte Reibungswiderstand macht die Oberfläche glatt. Das ist zweckmäßig, weil sich die Federleisten gut in das Wischerblatt einziehen lassen. Dies gilt natürlich besonders bei Wischerblättern mit innenliegender Federleiste, wie sie in der Figur dargestellt sind. Weiterhin erleichtert ein glatter Wischerkopf die Montage des Wischerblatts in die Krallen des Bügelsystems. Der verminderte Abrieb ist an den Stellen erwünscht, an denen die Krallen den Kopf festhalten, weil diese Stellen bei der Hin- und Herbewegung des Wischers auf Abrieb beansprucht werden.

Für den Kopf **1** geeignete Polymere sind z.B. vulkanisierter Naturkautschuk (Naturgummi) und andere Gummiarten vom Butadien-Typ, wie Butadien-Gummi und Butadien-Styrol-Gummi.Dabei werden die Polymeren für die Kautschukmischung, die Härtungsmittel nach Art und Menge, die Extrusionsparameter und die Vulkanisierungsbedingungen so gewählt, daß ein Gummi resultiert, der der gewünschten Shore A-Härte entspricht. Der Zusammenhang zwischen der Shore A-Härte und den zuvor erwähnten Parametern ist dem Fachmann wohlbekannt. Auch die Methoden zur Halogenierung gehören zum Stand der Technik. Diese wird üblicherweise durchgeführt, indem man das Wischerblatt 1 bis 10 Minuten in eine Natriumhypochlorit-Lösung mit einer Temperatur von 20 bis 30 °C eintaucht, die 5 bis 10% verfügbares Chlor enthält.

Ein wesentliches Merkmal des Wischerblatts nach der Erfindung ist ein Kippsteg **2** aus einem vergleichsweise weichen, elastischen Polymeren mit einer Shore A-Härte von 50 bis 75, insbesondere von 55 bis 65. "Vergleichsweise" bedeutet "im Vergleich zu den Polymeren des Kopfes **1** und der Lippe **3**". Die Shore A-Härte ist zweckmäßig um mindestens 2 Einheiten kleiner als die Shore A-Härte des oder der Polymeren, die den Kopf **1** bzw. die Lippe **3** bilden. Vorteilhaft ist die Shore A-Härte des Kippsteges um mindestens 5, insbesondere um mindestens 10 Einheiten kleiner als die Shore A-Härte des oder der Polymeren, die den Kopf **1** bzw. die Lippe **3** bilden.

Zweckmäßig wählt man ein Polymeres aus, das beständig gegen Ozon ist. Das Polymere darf bei der Halogenierung des Wischerblatts nicht oder nicht wesentlich gehärtet werden. Durch Halogenierung gehärtete Polymere zeigen auf der Oberfläche mikroskopisch kleine Schollen. Solche Schollen sollen nach der Halogenierung des Wischerblatts nicht oder kaum vorhanden sein. Es soll zumindest keine zusammenhängende Lage von Schollen vorhanden sein. Zwar verbessert die Halogenierung den Reibwiderstand und die Abriebbeständigkeit, sie fördert aber auch die Bildung von Rissen bei Licht- und Ozoneinwirkung, was zur mechanischen Desintegration des Wischerblatts führen kann. Die Neigung zur Rißbildung ist beim Kopf **1** hinnehmbar, weil dieser zumindest an den beanspruchten Stellen durch den Metallbügel weitgehend der direkten Sonneneinstrahlung entzogen ist. Dort überwiegen also die Vorteile durch die Halogenierung deren Nachteile. Für den vergleichsweise schmalen, aber durch die Hin- und Herbewegung beim Wischen besonders beanspruchten und zudem der direkten Sonneneinstrahlung stärker ausgesetzten Kippsteg **2** sollte dagegen das gewählte Polymere nicht oder nicht wesentlich halogenierbar sein. Die Härtbarkeit von Polymeren durch Halogenierung ist eine Eigenschaft, die durch die Struktur der Polymeren festgelegt ist. Diese Zusammenhänge sind dem Fachmann geläufig.

Für den Steg **2** geeignete, vergleichsweise weiche und elastische Polymere können z.B. aus den folgenden, entsprechend eingestellten Gummiarten ausgewählt werden: EPDM (Terpolymere aus Ethylen, Propylen und einem Dien mit restlichen olefinischen Doppelbindungen), ACM (Copolymere des Ethylacrylats oder anderer Acrylate mit kleinen Mengen vulkanisationsfördernder Monomeren), CFM (Polytrichlorfluorethylen), CSM (chlorsulfoniertes Polyethylen), IM (Polyisobuten), ECO (Copolymere von Ethylenoxid mit Epichlorhydrin) und FVMQ (Silicongummi mit Methyl-, Vinylgruppen und Fluoratomen in der Polymerkette).

Die Lippe **3** besteht aus einem durch Halogenierung gehärteten Polymeren mit einer Shore A-Härte von 60 bis 85. Vorteilhaft beträgt die Shore A-Härte 60 bis 70. Brauchbare Polymere sind z.B. die zuvor beschriebenen, die sich für den Kopf **1** eignen, wobei die Steifigkeit hier weniger wichtig ist als das gewisse Maß an Elastizität, das ein Anschmiegen der Lippe an die zumeist gewölbte Glasscheibe erleichtert. Kopf **1** und Lippe **3** können aus dem gleichen Polymeren bestehen, man kann aber auch verschiedene Polymere für'diese beiden Teile verwenden. Die Lippe **3** wird durch Halogenierung gehärtet. Ein niedriger Reibwiderstand der Lippe ist wichtig, weil anderenfalls, insbesondere im Schnellgang, Rubbelgeräusche vernehmbar werden und im Extremfall sogar der Wischermotor durchbrennt. Daß Abriebbeständigkeit gerade an den Stellen, an denen die Lippe 3 die verschmutzte Glasscheibe berührt, eine wünschenswerte Eigenschaft ist, bedarf keiner weiteren Erklärung.

Die Wischerblätter lassen sich in üblicher Weise durch Koextrudieren der verschiedenen vernetzbaren Polymerenmischungen, Vernetzung des Koextrudats in der Wärme und Zerschneiden des Stranges auf die gewünschten Blattlängen herstellen. Diese Techniken sind dem Fachmann gut bekannt. Die vernetzbaren Polymerenmischungen können die üblichen Vernetzungsmittel und Zusatzstoffe enthalten, wie Schwefel, Sulfenamide, Peroxide (wie Dicumylperoxid) sowie Ruß, Zinkoxid und andere Füllstoffe, Hitze-, Oxidations- und Ozonolysestabilisatoren.

## Patentansprüche

1. Wischerblatt mit einem Kopf (1) zur Befestigung im Wischerbügel, einem Kippsteg (2) und einer Lippe (3), wobei der Kopf (1) aus einem steifen, durch Halogenierung gehärteten Polymeren und die Lippe (3) aus einem durch Halogenierung gehärteten Polymeren besteht,
**dadurch gekennzeichnet, daß**
der Kopf aus einem Polymeren mit einer Shore A-Härte von 60 bis 85, der Kippsteg (2) aus einem vergleichsweise weichen, elastischen, durch Halogenierung nicht oder nicht wesentlich härtbaren Polymeren mit einer Shore A-Härte von 50 bis 75 und die Lippe (3) aus einem Polymeren mit einer Shore A-Härte von 60 bis 85 besteht.

2. Wischerblatt nach Anspruch 1, **dadurch gekennzeichnet, daß** die Shore A-Härte des Polymeren, aus dem der Kippsteg (2) besteht, um mindestens 2 Einheiten geringer ist als die Shore A-Härte des oder der Polymeren, die den Kopf (1) bzw. die Lippe (3) bilden.

3. Wischerblatt nach Anspruch-1, **dadurch gekennzeichnet, daß** die Shore A-Härte des Polymeren, aus dem der Kippsteg (2) besteht, um mindestens 5 Einheiten geringer ist als die Shore A-Härte des oder der Polymeren, die den Kopf (1) bzw. die Lippe (3) bilden.

4. Wischerblatt nach Anspruch 1, **dadurch gekennzeichnet, daß** die Shore A-Härte des Polymeren, aus dem der Kippsteg (2) besteht, um mindestens 10 Einheiten geringer ist als die Shore A-Härte des oder der Polymeren, die den Kopf (1) bzw. die Lippe (3) bilden.

5. Wischerblatt nach einem der vorhergehenden Ansprüche, **dadurch gekennzeichnet, daß** die Shore A-Härte des Kopfes (1) und/oder der Lippe (3) zwischen 60 und 70 beträgt.

6. Wischerblatt nach einem der vorhergehenden Ansprüche, **dadurch gekennzeichnet, daß** die Shore A-Härte des Kippstegs (2) zwischen 55 und 65 beträgt.

7. Wischerblatt nach einem der vorhergehenden Ansprüche, **dadurch gekennzeichnet, daß** der Kippsteg (2) aus EPDM-Gummi besteht.

8. Wischerblatt nach einem der Ansprüche 1 bis 7, **dadurch gekennzeichnet, daß** der Kopf (1) und die Lippe (3) aus verschiedenen Polymeren bestehen.

9. Wischerblatt nach einem der Ansprüche 1 bis 7, **dadurch gekennzeichnet, daß** der Kopf (1) und die Lippe (3) aus dem gleichen Polymeren bestehen.

10. Wischerblatt nach einem der vorhergehenden Ansprüche, **dadurch gekennzeichnet, daß** es durch Koextrusion, Vernetzung des Koextrudats und Zerschneiden des Stranges auf die gewünschte Blattlänge hergestellt wurde.1

## Claims

1. Wiper blade with a head (1) to be secured in the wiper bracket, a swivelling web (2) and a lip (3), the head (1) consisting of a rigid polymer which is cured by halogenation, and the lip (3) consisting of a polymer which is cured by halogenation, **characterized in that** the head consists of a polymer with a Shore A hardness of 60 to 85, the swivelling web (2) consists of a relatively soft, elastic polymer which cannot be cured or cannot significantly be cured by halogenation and has a Shore A hardness of 50 to 75, and the lip (3) consists of a polymer with a Shore A hardness of from 60 to 85.

2. Wiper blade according to Claim 1, **characterized in that** the Shore A hardness of the polymer of which the swivelling web (2) consists is at least 2 units lower than the Shore A hardness of the polymer or polymers which form(s) the head (1) and/or the lip (3).

3. Wiper blade according to Claim 1, **characterized in that** the Shore A hardness of the polymer of which the swivelling web (2) consists is at least 5 units lower than the Shore A hardness of the polymer or polymers which form(s) the head (1) and/or the lip (3).

4. Wiper blade according to Claim 1, **characterized in that** the Shore A hardness of the polymer of which the swivelling web (2) consists is at least 10 units lower than the Shore A hardness of the polymer or polymers which form(s) the head (1) and/or the lip (3).

5. Wiper blade according to one of the preceding claims, **characterized in that** the Shore A hardness of the head (1) and/or of the lip (3) is between 60 and 70.

6. Wiper blade according to one of the preceding claims, **characterized in that** the Shore A hardness of the swivelling web (2) is between 55 and 65.

7. Wiper blade according to one of the preceding claims, **characterized in that** the swivelling web (2) consists of EPDM rubber.

8. Wiper blade according to one of Claims 1 to 7, **characterized in that** the head (1) and the lip (3) consist of different polymers.

9. Wiper blade according to one of Claims 1 to 7, **characterized in that** the head (1) and the lip (3) consist of the same polymer.

10. Wiper blade according to one of the preceding claims, **characterized in that** it has been produced by co-extrusion, crosslinking of the co-extrudate and cutting the extrudate to the desired blade length.

## Revendications

1. Balai d'essuie-glace comprenant une tête (1) pour fixation à l'étrier d'essuie-glace, une barrette de basculement (2) et une lèvre (3), la tête (1) étant faite d'un polymère rigide, durci par halogénation, et la lèvre (3) d'un polymère durci par halogénation,
**caractérisé en ce que**
la tête est faite d'un polymère présentant une dureté Shore A de 60 à 85, tandis que la barrette de basculement (2) est faite d'un polymère comparativement mou, élastique, qui ne peut pas, ou sensiblement pas être durci par halogénation, et présente une dureté Shore A de 50 à 75, la lèvre (3) étant faite d'un polymère ayant une dureté Shore A de 60 à 85.

2. Balai d'essuie-glace selon la revendication 1,
**caractérisé en ce que**
la dureté Shore A du polymère dont est constituée la barrette de basculement (2), est inférieure d'au moins 2 unités à la dureté Shore A du ou des polymères constituant la tête (1) ou la lèvre (3).

3. Balai d'essuie-glace selon la revendication 1,
**caractérisé en ce que**
la dureté Shore A du polymère dont est constituée la barrette de basculement (2), est inférieure d'au moins 5 unités à la dureté Shore A du ou des polymères constituant la tête (1) ou la lèvre (3)

4. Balai d'essuie-glace selon la revendication 1,
**caractérisé en ce que**
la dureté Shore A du polymère dont est constituée la barrette de basculement (2), est inférieure d'au moins 10 unités à la dureté Shore A du ou des polymères constituant la tête (1) ou la lèvre (3).

5. Balai d'essuie-glace selon l'une quelconque des revendications précédentes,
**caractérisé en ce que**
la dureté Shore A de la tête (1) et/ou de la lèvre (3) est comprise entre 60 et 70.

6. Balai d'essuie-glace selon l'une quelconque des revendications précédentes,
**caractérisé en ce que**
la dureté Shore A de la barrette de basculement (2) est comprise entre 55 et 65.

7. Balai d'essuie-glace selon l'une quelconque des revendications précédentes,
**caractérisé en ce que**
la barrette de basculement (2) est en caoutchouc d'EPDM.

8. Balai d'essuie-glace selon l'une quelconque des revendications 1 à 7,
**caractérisé en ce que**
la tête (1) et la lèvre (3) sont faites de polymères différents.

9. Balai d'essuie-glace selon l'une quelconque des revendications 1 à 7,
**caractérisé en ce que**
la tête (1) et la lèvre (3) sont faites du même polymère.

10. Balai d'essuie-glace selon l'une quelconque des revendications précédentes,
**caractérisé en ce qu'**
elle a été fabriquée par coextrusion, réticulation du coextrudat et coupe de la bande à la longueur désirée pour le balai.
